# EUROPEAN PATENT SPECIFICATION

(11) **EP 2 238 047 B1**
(45) Date of publication and mention of the grant of the patent: **22.06.2016**
(21) Application number: 09700492.3
(22) Date of filing: 08.01.2009
(51) Int. Cl.: B65D 83/00

(54) **COMPOSITE CONTAINER AND METHOD FOR MANUFACTURING SAME**
VERBUNDBEHÄLTER UND HERSTELLUNGSVERFAHREN DAFÜR
CONTENANT COMPOSITE ET SON PROCÉDÉ DE FABRICATION

(30) Priority: 08.01.2008 NL 1034895
(43) Date of publication of application: 13.10.2010
(73) Proprietor: Dispensing Technologies B.V., 5705 DE Helmond (NL)
(72) Inventor: MAAS, Wilhelmus, Johannes, Joseph, NL-7511 KV Someren (NL); VAN WIJK, Dominicus, Jan, NL-5704 DM Helmond (NL); SNIJDERS, Josephus, Cornelis, NL-5757 RM Liessel (NL)
(74) Representative: Bartelds, Erik
(86) International application number: PCT/NL2009/000001
(87) International publication number: WO 2009/088285

(56) References cited:
- EP-A- 0 759 399
- EP-A- 1 226 874
- EP-A- 1 459 996
- WO-A-91/08099
- WO-A-92/11187
- JP-A- 57 174 221
- US-A- 4 330 066
- US-A- 5 567 377
- US-A1- 2003 218 021
- US-A1- 2005 103 802

## Description

The invention relates to a composite container, comprising a form-retaining outer container and at least one flexible inner container received therein, which inner container comprises a dispensing opening which is mounted in a neck of the outer container, wherein the at least one inner container is further connected over at least a part of its periphery to the outer container. Such a composite container is described in the non-prepublished Netherlands patent application 1033582 of applicant. US 5567377 describes another example of such a composite container.

In this earlier composite container the outer container and the inner container are formed integrally means of a two-component injection moulding process, followed by heating and blowing, so-called blow moulding. The inner container adheres here over its whole outer surface to the inner surface of the outer container. In this earlier composite container the connection between the inner container and the outer container is gradually broken when a displacing medium such as air is forced between the two containers. The flexible inner container is here gradually compressed further, whereby the content thereof, generally a liquid or a pasty mass, is pressed out of the composite container through the dispensing opening.

The invention now has for its object to further develop the above described composite container such that it is easier to manufacture and dispensing therefrom can be better controlled. According to the invention this is achieved in a composite container according to appended claim 1. The adhesive connection, referred to in claim 1, can be arranged in simple manner and can be adapted to the desired release behaviour without the properties or materials of the outer container or the inner container having to be modified for this purpose.

Preferred embodiments of the composite container according to the invention are described in dependent claims 2-6.

The invention relates to a method for manufacturing a composite container as described above, according to appended claim.

Preferably applied variants of this method form the subject-matter of dependent claims 8-14.

The invention is now elucidated on the basis of a number of examples, wherein reference is made to the accompanying drawing, in which:
Fig. 1 shows a side view of an inner container formed by injection moulding with an adhesive strip according to a first embodiment of the invention,
Fig. 2 shows a longitudinal section of how the inner container is received in an outer container likewise formed by injection moulding,
Fig. 3 is a cross-section in which the inner and outer containers are shown in assembled situation,
Fig. 4 shows a cross-section through the composite container of fig. 3 after it has been inflated to its final form, filled with a product for dispensing, closed with a dosing head and provided with a connecting member for a source of displacing medium,
Fig. 5-7 show cross-sections of the composite container of figure 4 during different stages of dispensing of the product from the container,
Fig. 8 is a view corresponding with fig. 1 of an inner container with an adhesive strip according to a second embodiment of the invention,
Fig. 9 is a view corresponding with fig. 4 of the composite container with the adhesive pattern of fig. 8,
Fig. 10-12 show cross-sections of the composite container of fig. 9 during various stages of dispensing of the product from the container,
Fig. 13 is a view corresponding with fig. 3 of yet another embodiment of the composite container with two inner containers received in each other,
Fig. 14 shows a cross-section through the composite container of fig. 13 after it has been inflated to its final form and filled with two products for dispensing,
Fig. 15 is a view corresponding with fig. 14 of the composite container during dispensing of the products from the two inner containers,
Fig. 16 is a view corresponding with fig. 1 and fig. 8 of an inner container with an adhesive strip according to yet another embodiment of the invention,
Fig. 17 is a view corresponding with fig. 3 and fig. 13 of a composite container on the basis of the inner container of fig. 13, and
Fig. 18-20 show cross-sections of the composite container of fig. 17 during various stages of dispensing of the product from the container.

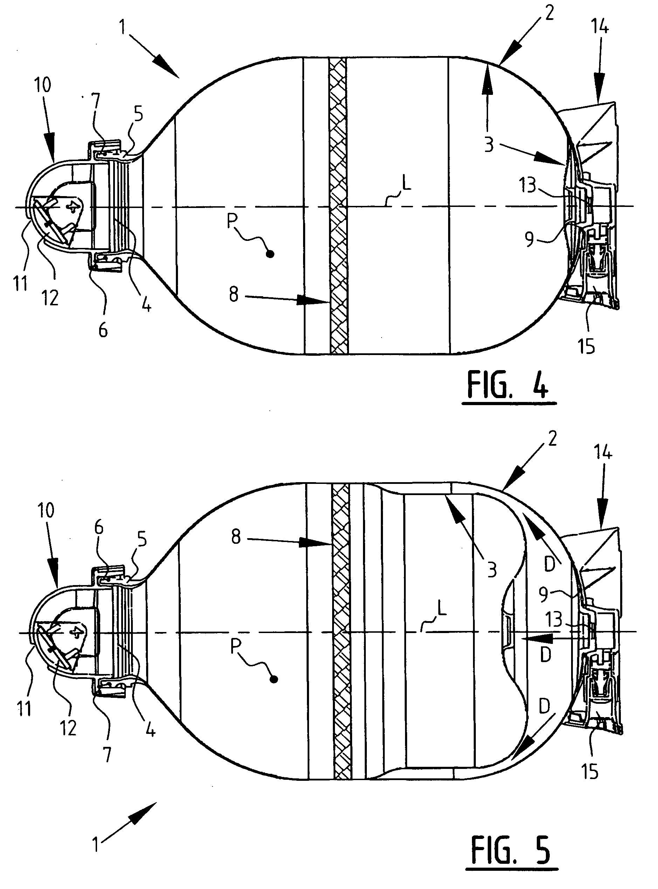

A composite container 1 (fig. 4) according to the invention comprises a form-retaining outer container 2 and a flexible inner container 3 which is received therein and which can be filled with a product P for dispensing, for instance a liquid or a pasty mass. Inner container 3 has a dispensing opening 4 which is mounted in a neck 5 of outer container 2. In the shown example dispensing opening 4 has a bent collar 6 which is snapped round an edge 7 on neck 5. Inner container 3, which lies over substantially its whole surface against the inner wall of outer container 2, is further connected according to the invention to outer container 2 by an adhesive connection 8 over at least a part of its periphery, and in the shown example over its whole periphery.

In the shown example adhesive connection 8 takes the form of a strip. This strip extends transversely of a longitudinal axis L which runs from dispensing opening 4 to a bottom 9 of container 1 lying opposite. Adhesive strip 8 is here arranged halfway between dispensing opening 4 and bottom 9 and can withstand the pressures which will occur in composite container 1 during dispensing of product P therefrom.

Dispensing opening 4 of inner container 3, which also functions as dispensing opening of the whole composite container 1, is closed by a dosing head 10 mounted thereon and having a dosing opening 11 which can be closed by a pivotable closure member 12. Formed in the bottom of outer container 2 is an opening 13 through which a displacing medium D such as air can be forced between inner container 3 and outer container 2 (fig. 5). Provided for this purpose is a connecting member 14, an opening 15 of which can be connected to a source (not shown) of displacing medium D, for instance an air pump.

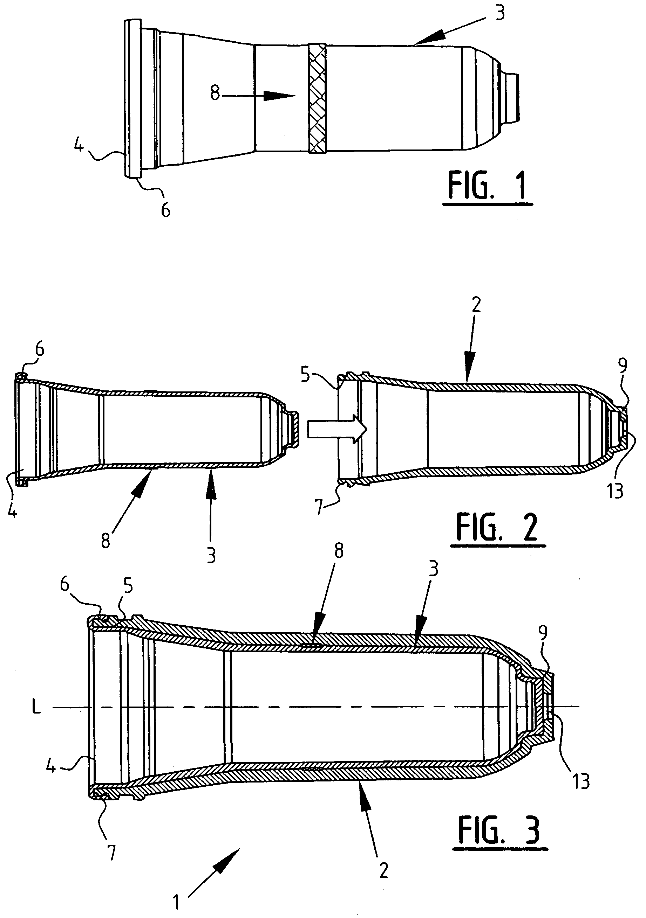

In the shown example outer container 2 and inner container 3 are both formed separately by injection moulding, the outer container 2 from polyethylene terephthalate (PET) and inner container 3 from polypropylene (PP). They leave the injection mould as a relatively thick-walled semi-manufacture (referred to as preform) which has roughly the form of a test tube. Adhesive strip 8 is arranged around the preform of inner container 3 (fig. 1), after which this preform is inserted into the preform of outer container 2 (fig. 2) and fixed therein (fig. 3). The fixing is effected on the one hand by mechanical means by clicking collar 6 fixedly round edge 7, and on the other by chemical means by means of adhesive connection 8. The preforms are then heated to a temperature between the glass temperature and the melting temperature of the plastics used so that they become soft. The composite container can then be blown into its final shape in a mould.

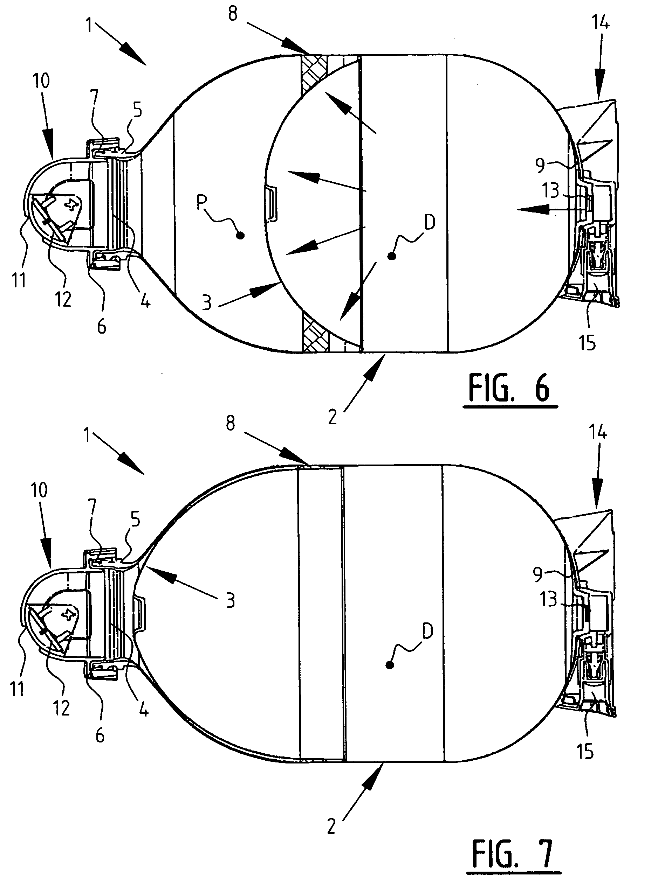

When composite container 1 is used for dosed dispensing of product P, a displacing medium D is forced, as stated, into the space between outer container 2 and inner container 3 via connecting member 14 and opening 13. Pressure is hereby developed in inner container 3 so that product P will flow therefrom as soon as closure member 12 leaves clear the opening 11 in dosing head 10. The presence of adhesive strip 8 ensures here that, from roughly halfway along, the inner container 3 remains adhered over its whole periphery to outer container 2, so that displacing medium D cannot come into the vicinity of dispensing opening 4. Inner container 3 is thus emptied uniformly from bottom 9 and is prevented from being pressed closed from somewhere along the sides, whereby product P could become "trapped". Because adhesive connection 8 can withstand the pressures occurring when a container 3 is being pressed, the inner container will as it were fold up around adhesive connection 8, as shown particularly when figures 6 and 7 are compared.

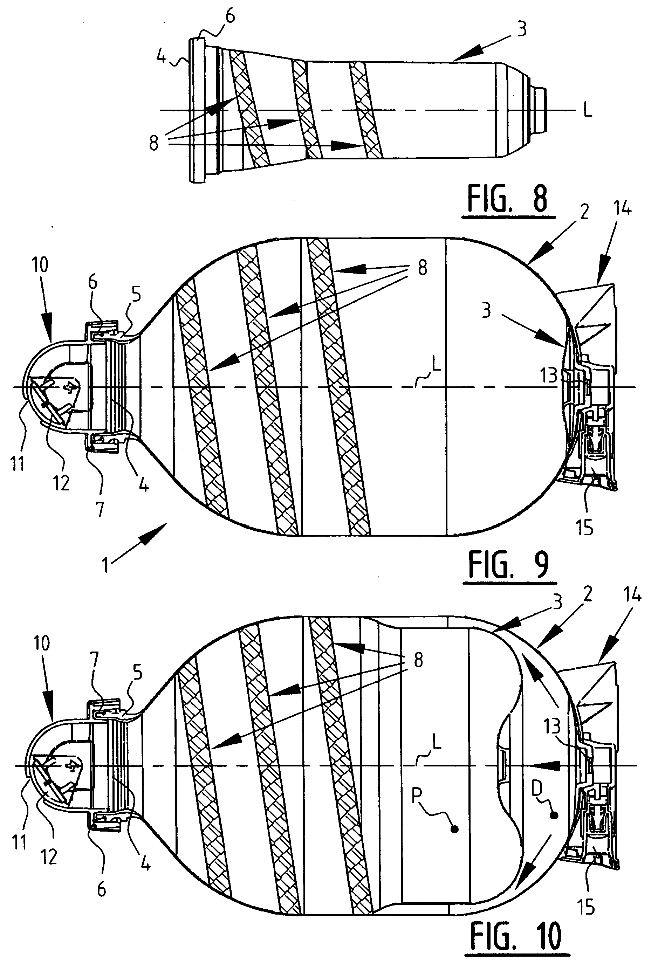

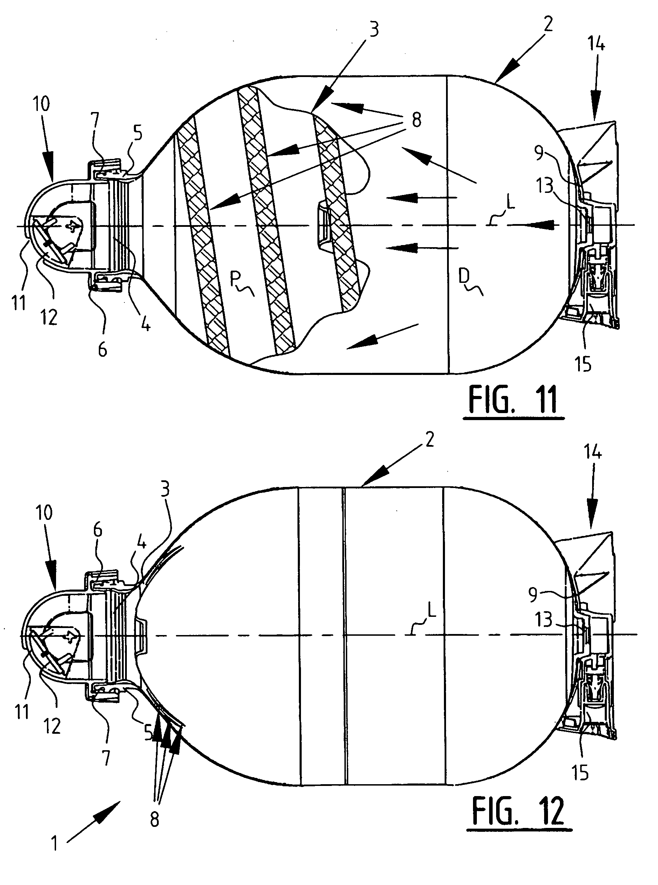

In an alternative embodiment of the invention adhesive strip 8 does not lie transversely of longitudinal axis L but runs at a non-right angle (fig. 8). Adhesive strip 8 in fact runs spirally here. In this embodiment adhesive connection 8 is adapted to detach in controlled manner under the influence of pressures occurring in container 1. When product P is dispensed from this embodiment of composite container 1 by admitting displacing medium D under pressure, inner container 3 does not therefore fold over when reaching adhesive connection 8 as in the first embodiment. Instead, inner container 3 is gradually pulled away from the side wall of outer container 2 as a result of adhesive connection 8 detaching (fig. 9-12).

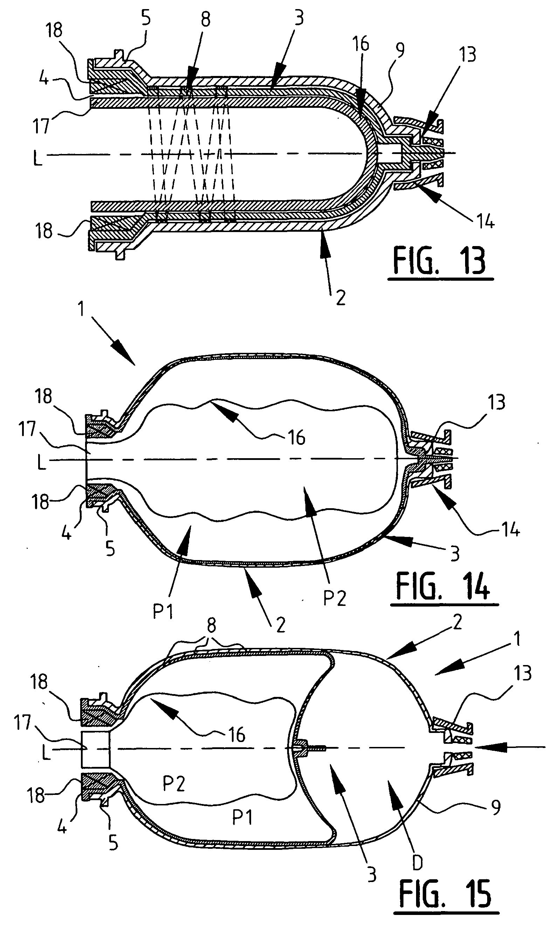

In yet another embodiment of composite container 1, which is suitable for simultaneously dispensing two products P1 and P2, a secondary inner container 16 is received in first inner container 3, which is connected to outer container 2 by means of adhesive connection 8 (fig. 13). This secondary inner container 16 likewise has a dispensing opening 17, which is mounted in random manner in dispensing opening 4 of the primary inner container 3. Also arranged between dispensing opening 4 of primary inner container 3 and dispensing opening 17 of secondary inner container 16 are a number of ribs 18, which are distributed in peripheral direction and which keep clear a number of passages between the two inner containers 3, 16. In this way the primary inner container 3 can be filled with the product P1 to be dispensed therefrom (fig. 14) and this product P1 can in turn also be dispensed therefrom.

During use of this composite container 1 a displacing medium D is once again urged into the space between outer container 2 and primary inner container 3, whereby primary inner container 3 is brought under pressure. The secondary inner container 16 received therein is simultaneously also placed under pressure as a result. Product P1 in primary inner container 3 here in fact functions as displacing medium for secondary inner container 16. When the dosing head (not shown) is then opened, products P1 and P2 are dispensed simultaneously from composite container 1 (fig. 15).

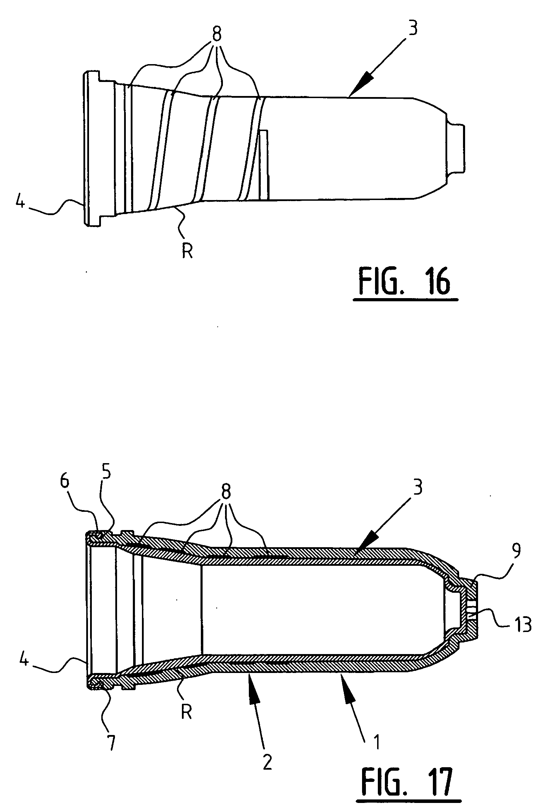

In the final embodiment shown here the adhesive strip 8 is also arranged spirally round inner container 3, around the part of inner container 3 situated closest to dispensing opening 4 (fig. 16). At the position where adhesive strip 8 is arranged, inner container 3 has in its outer surface a recess R in which the adhesive can be received. The recess can for instance be formed by locally reducing the wall thickness or by displacing the whole wall slightly inward.

When inner container 3 is pressed into outer container 2, adhesive strip 8 is spread and distributed over the whole recess R - as shown schematically by the wider strip in fig. 17. Despite the fact that the recessed wall part of inner container 3 itself does not lie against the inner wall of outer container 2, a good connection is nevertheless formed between inner container 3 and outer container 2. This is important for a good heat transfer during blow moulding of inner and outer containers 2, 3. During this blow moulding the already spread adhesive layer is distributed even further under the influence of the high pressure (in the order of 30 bar or more), so that a very uniform connection is formed over a considerable part of the contact surface between inner container 3 and outer container 2.

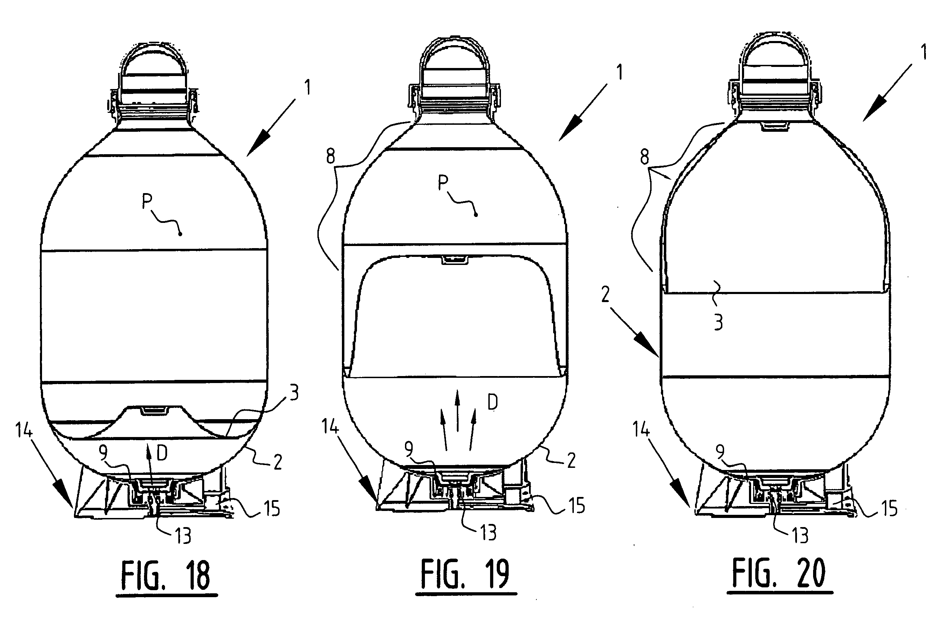

Adhesive connection 8 in this embodiment is not intended to detach in controlled manner. Adhesive connection 8 must instead withstand pressures which occur when displacing medium D is pressed into composite container 1. Displacing medium D is thus prevented from being able to penetrate between inner container 3 and outer container 2 in the vicinity of dispensing opening 4. Inner container 3 then as it were folds over, and its non-adhered part eventually comes to lie along its adhered part (fig. 20).

The invention thus makes it possible to form a composite container in relatively simple manner, from which a product can be dispensed uniformly by means of a displacing medium, without the product coming into contact with the displacing medium. The composite container according to the invention is thus highly suitable for application with food products.

Although the invention has been elucidated above on the basis of a number of embodiments, it will be apparent that the invention is not limited thereto. The inner container and/or the outer container could thus be manufactured from materials other than discussed here, and could in particular comprise multiple layers. The form and dimensions of the inner and outer containers could also be varied, wherein it would also be possible to receive a plurality of inner containers in a single outer container adjacently of, instead of in, each other. The adhesive connection between the (primary) inner container(s) and outer container could further be differently formed. It is for instance possible to envisage arranging a number of adhesive strips distributed over the periphery which run parallel to the longitudinal axis. Such strips could either form a permanent connection, around which the inner container folds, or could detach gradually.

The scope of the invention is therefore defined solely by the following claims.

## Claims

1. Composite container, comprising a form-retaining outer container and at least one flexible inner container received therein, which inner container comprises a dispensing opening which is mounted in a neck of the outer container, wherein the at least one inner container is further connected over at least a part of its periphery to the outer container forming a contact surface,
wherein the connection is an adhesive connection, the adhesive connection extending over a considerable portion of an upper portion of the inner container, so as to bind said upper portion of the inner container to a corresponding upper portion of the outer container, **characterised in that** the outer surface of the inner container and/or the inner surface of the outer container has a recess in which the adhesive is received.

2. Composite container as claimed in claim 1, wherein the adhesive connection extends substantially over one of (i) at least half of and (ii) the whole periphery of, the inner container.

3. Composite container as claimed in claim 1 or 2, wherein the adhesive connection can withstand pressures occurring in the container.

4. Composite container as claimed in claim 1, wherein the adhesive connection is adapted to detach in controlled manner under the influence of pressures occurring in the container.

5. Composite container as claimed in any of the foregoing claims, wherein a secondary inner container is received in the inner container connected by the adhesive connection to the outer container.

6. Composite container as claimed in any of the foregoing claims, wherein the inner container and the outer container are each preformed as an injection-moulded part and, after the adhesive connection has been realized, are brought into their final form by blow moulding.

7. Method for manufacturing a composite container, comprising:
forming a preform of a form-retaining outer container comprising a neck,
forming a preform of at least one flexible inner container comprising a dispensing opening, and
receiving the at least one preform of an inner container in the preform of an outer container and fixing said preform of an inner container to the neck thereof,
connecting a portion of an outer surface of said preform of an inner container with a corresponding inner surface of the preform of an outer container forming a contact surface, wherein the connection is an adhesive connection, the adhesive connection extending over a considerable portion of an upper portion of the inner container so as to bind said upper portion of the inner container to a corresponding upper portion of the outer container, **characterised in that** either the outer surface of the inner container, or the inner surface of the outer container is provided with a recess in which an adhesive is received, blowing the container into its final shape in a mould.

8. Method as claimed in claim 7, wherein the adhesive connection is formed substantially over the whole periphery of the at least one inner container and outer container.

9. Method as claimed in claim 7 or 8, wherein the adhesive is arranged on the at least one inner container before the inner container is received in the outer container.

10. Method as claimed in any of claims 7-9, wherein the adhesive is distributed over the recess during placing of the inner container into the outer container.

11. Method as claimed in any of the claims 7-10, wherein a secondary inner container is received in the inner container connected by the adhesive connection to the outer container.

12. Method as claimed in any of the claims 7-11, wherein the outer container and the at least one inner container are formed by injection moulding.

13. Method as claimed in claim 12, wherein after being adhered to each other, the outer container and the at least one inner container are brought into their final form by blow moulding.

14. Method as claimed in claim 13, wherein during blow moulding the adhesive layer is distributed even further under the influence of high pressure, so as to form a uniform connection over a considerable part of the contact surface between the inner container and the outer container.

## Patentansprüche

1. Zusammengesetzter Behälter, der einen formbeständigen äußeren Behälter und wenigstens einen in diesem aufgenommenen flexiblen inneren Behälter umfasst, wobei der innere Behälter eine Ausgabeöffnung umfasst, die in einem Hals des äußeren Behälters befestigt ist, wobei der wenigstens eine innere Behälter außerdem über wenigstens einen Teil seines Umfangs mit dem äußeren Behälter verbunden ist und dabei eine Kontaktfläche bildet,
wobei die Verbindung eine Klebeverbindung ist und die Klebeverbindung sich über einen erheblichen Teil eines oberen Teils des inneren Behälters erstreckt, um dadurch den oberen Teil des inneren Behälters an einen zugehörigen oberen Teil des äußeren Behälters zu binden, **dadurch gekennzeichnet, dass** die Außenfläche des inneren Behälters und/oder die Innenfläche des äußeren Behälters eine Aussparung hat, in der das Klebemittel aufgenommen ist.

2. Zusammengesetzter Behälter nach Anspruch 1, wobei die Klebeverbindung sich im Wesentlichen über eines von (i) wenigstens der Hälfte des und (ii) dem gesamten Umfang des inneren Behälters erstreckt.

3. Zusammengesetzter Behälter nach Anspruch 1 oder 2, wobei die Klebeverbindung Drücken standhalten kann, die im Behälter auftreten.

4. Zusammengesetzter Behälter nach Anspruch 1, wobei die Klebeverbindung dafür eingerichtet ist, unter der Wirkung von Drücken, die im Behälter auftreten, sich auf kontrollierte Weise abzulösen.

5. Zusammengesetzter Behälter nach einem der vorhergehenden Ansprüche, wobei ein sekundärer innerer Behälter in dem inneren Behälter, der durch die Klebeverbindung mit dem äußeren Behälter verbunden ist, aufgenommen ist.

6. Zusammengesetzter Behälter nach einem der vorhergehenden Ansprüche, wobei von dem inneren Behälter und dem äußeren Behälter jeder als ein Spritzgussformteil vorgeformt ist, und, nachdem die Klebeverbindung ausgeführt wurde, diese durch Blasformen in ihre endgültige Form gebracht werden.

7. Verfahren zur Herstellung eines zusammengesetzten Behälters, Folgendes umfassend:
Bilden einer Vorform für einen formbeständigen äußeren Behälter, der einen Hals umfasst,
Bilden einer Vorform für wenigstens einen flexiblen inneren Behälter, der eine Ausgabeöffnung umfasst, und
Empfangen der wenigstens einen Vorform für einen inneren Behälter in der Vorform für einen äußeren Behälter und Fixieren der Vorform für einen inneren Behälter an deren Hals,
Verbinden eines Teils einer Außenfläche der Vorform für einen inneren Behälter mit einer zugehörigen Innenfläche der Vorform für einen äußeren Behälter, wobei eine Kontaktfläche gebildet wird und wobei die Verbindung eine Klebeverbindung ist und die Klebeverbindung sich über einen erheblichen Teil eines oberen Teils des inneren Behälters erstreckt, um dadurch den oberen Teil des inneren Behälters an einen zugehörigen oberen Teil des äußeren Behälters zu binden, **dadurch gekennzeichnet, dass** entweder die Außenfläche des inneren Behälters oder die Innenfläche des äußeren Behälters mit einer Aussparung ausgestattet ist, in der ein Klebemittel aufgenommen ist,
Aufblasen des Behälters in seine endgültige Form in einer Gussform.

8. Verfahren nach Anspruch 7, wobei die Klebeverbindung im Wesentlichen über den gesamten Umfang des wenigstens einen inneren Behälters und des äußeren Behälters gebildet wird.

9. Verfahren nach Anspruch 7 oder 8, wobei das Klebemittel auf dem wenigstens einen inneren Behälter eingerichtet wird bevor der innere Behälter im äußeren Behälter aufgenommen wird.

10. Verfahren nach einem der Ansprüche 7 bis 9, wobei das Klebemittel über die Aussparung verteilt wird während der innere Behälter in den äußeren Behälter hinein platziert wird.

11. Verfahren nach einem der Ansprüche 7 bis 10, wobei ein sekundärer innerer Behälter in dem inneren Behälter, der durch die Klebeverbindung mit dem äußeren Behälter verbunden ist, aufgenommen ist.

12. Verfahren nach einem der Ansprüche 7 bis 11, wobei der äußere Behälter und der wenigstens eine innere Behälter durch Spritzguss gebildet werden.

13. Verfahren nach Anspruch 12, wobei, nachdem sie miteinander verklebt wurden, der äußere Behälter und der wenigstens eine innere Behälter durch Blasformen in ihre endgültige Form gebracht werden.

14. Verfahren nach Anspruch 13, wobei während des Blasformens unter der Einwirkung hohen Drucks die Klebeschicht noch weiter verteilt wird, um dadurch eine gleichmäßige Verbindung über einen erheblichen Teil der Kontaktfläche zwischen dem inneren Behälter und dem äußeren Behälter zu bilden.

## Revendications

1. Contenant composite comprenant un contenant extérieur à retenue de forme et au moins un contenant intérieur flexible reçu dedans, lequel contenant intérieur comprend une ouverture de distribution qui est montée dans un goulot du contenant extérieur, dans lequel l'au moins un contenant intérieur est en outre relié sur au moins une partie de sa périphérie au contenant extérieur formant une surface de contact,
dans lequel la liaison est une liaison adhésive, la liaison adhésive s'étendant sur une partie considérable d'une partie supérieure du contenant intérieur de manière à relier ladite partie supérieure du contenant intérieur à une partie supérieure correspondante du contenant extérieur, **caractérisé en ce que** la surface extérieure du contenant intérieur et/ou la surface intérieure du contenant extérieur comporte un évidement, dans lequel l'adhésif est reçu.

2. Contenant composite selon la revendication 1, dans lequel la liaison adhésive s'étend sensiblement sur une de (i) au moins la moitié et (ii) la périphérie entière du contenant intérieur.

3. Contenant composite selon la revendication 1 ou 2, dans lequel la liaison adhésive peut résister à des pressions apparaissant dans le contenant.

4. Contenant composite selon la revendication 1, dans lequel la liaison adhésive est adaptée pour se détacher de manière contrôlée sous l'influence de pressions apparaissant dans le contenant.

5. Contenant composite selon l'une quelconque des revendications précédentes, dans lequel un contenant intérieur secondaire est reçu dans le contenant intérieur relié par la liaison adhésive au contenant extérieur.

6. Contenant composite selon l'une quelconque des revendications précédentes, dans lequel le contenant intérieur et le contenant extérieur sont chacun préformés comme une pièce moulée par injection et, après la réalisation de la liaison adhésive, sont amenés dans leur forme finale par moulage par soufflage.

7. Procédé de fabrication d'un contenant composite, comprenant :
la formation d'une préforme d'un contenant extérieur à retenue de forme comprenant un goulot,
la formation d'une préforme d'au moins un contenant intérieur flexible comprenant une ouverture de distribution et
la réception de l'au moins une préforme d'un contenant intérieur dans la préforme d'un contenant extérieur et la fixation de ladite préforme d'un contenant intérieur au goulot de celui-ci,
la liaison d'une partie d'une surface extérieure de ladite préforme d'un contenant intérieur avec une surface intérieure correspondante de la préforme d'un contenant extérieur formant une surface de contact, dans lequel la liaison est une liaison adhésive, la liaison adhésive s'étendant sur une partie considérable d'une partie supérieure du contenant intérieur de manière à relier ladite partie supérieure du contenant intérieur à une partie supérieure correspondante du contenant extérieur, **caractérisé en ce que** la surface extérieure du contenant intérieur ou la surface intérieure du contenant extérieur est dotée d'un évidement, dans lequel un adhésif est reçu,
le soufflage du contenant dans sa forme finale dans un moule.

8. Procédé selon la revendication 7, dans lequel la liaison adhésive est formée sensiblement sur la périphérie entière de l'au moins un contenant intérieur et contenant extérieur.

9. Procédé selon la revendication 7 ou 8, dans lequel l'adhésif est agencé sur l'au moins un contenant intérieur avant que le contenant intérieur ne soit reçu dans le contenant extérieur.

10. Procédé selon l'une quelconque des revendications 7 à 9, dans lequel l'adhésif est distribué sur l'évidement pendant le placement du contenant intérieur dans le contenant extérieur.

11. Procédé selon l'une quelconque des revendications 7 à 10, dans lequel un contenant intérieur secondaire est reçu dans le contenant intérieur relié par la liaison adhésive au contenant extérieur.

12. Procédé selon l'une quelconque des revendications 7 à 11, dans lequel le contenant extérieur et l'au moins un contenant intérieur sont formés par moulage par injection.

13. Procédé selon la revendication 12, dans lequel, après l'adhésion de l'un à l'autre, le contenant extérieur et l'au moins un contenant intérieur sont amenés dans leur forme finale par moulage par soufflage.

14. Procédé selon la revendication 13, dans lequel pendant le moulage par soufflage, la couche adhésive est distribuée même encore sous l'influence de haute pression de manière à former une liaison uniforme sur une partie considérable de la surface de contact entre le contenant intérieur et le contenant extérieur.
